# EUROPEAN PATENT APPLICATION

(11) **EP 3 285 203 A1**
(43) Date of publication of application: **21.02.2018**
(21) Application number: 16184873.4
(22) Date of filing: 19.08.2016
(51) Int. Cl.: G06K 9/00

(54) **METHOD FOR DETECTING A ROAD IN AN ENVIRONMENT OF A VEHICLE**

(71) Applicant: Continental Automotive GmbH, 30165 Hannover (DE)
(72) Inventor: Dumitrescu, Florin, 1900 Timisoara (RO)
(74) Representative: Reuter, Andreas

(57) **Abstract**

The invention relates to a method for detecting a road in an environment of a vehicle. In a step (S1), an image (10) of the environment of the vehicle (30) is provided by means of a camera (32) of the vehicle (30), the image (10) comprising information about a group of objects (11) in the environment of the vehicle (30). In another step (S2), the information about the group of objects (11) in the environment of the vehicle (30) is converted from the image (10) into a three-dimensional reference system. In another step (S3), a first object (21) and a second object (22) are selected out of the group of objects (11) based on an orientation of the first object (21) with respect to an orientation of the second object (22). In another step (S4), the presence of a road (23) in the environment of the vehicle (30) is detected based on the selected first object (21) and second object (22).

## Description

### Field of the invention

The invention generally relates to driver assistance systems relating to road detection. In particular, the invention relates to a method for detecting a road in an environment of a vehicle as well as to a driver assistance system and a vehicle comprising a driver assistance system.

### Background of the invention

Nowadays, there is a lot of interest in detecting a driving road for a vehicle. This is due to the fact that driver assistance systems are developed towards autonomous driving. In this context, machine learning algorithms are currently used approaches. For example, lane marker detection is in a quite advanced state already. However, road detection is a very difficult issue, especially when detecting a road in only one step. Various approaches are normally combined for a more optimal solution. For example, classification algorithms may provide a probabilistic answer for road detection problems. However, there still exist many drawbacks of the current approaches. For example, if a deep classifier is used, there may occur problems with the implementation on a low cost processor.

A method for determining the course of a road for a motor vehicle is shown in WO 2011/131165 A1. Sensor data generated by a surroundings sensor system which is aimed at the road are evaluated in order to detect lane-relevant features. A lane model having at least one lane model parameter which determines the course of the lane can be generated for the road. Structures of at least one distance range which are parallel to the road are detected in the sensor data. A tangential direction of at least the one structure which is parallel to the road is determined. The value of the tangential direction of the structure which is parallel to the road is adopted as the value of the tangential direction at the point of contact with the structure which is parallel to the road in order to determine at least the one lane model parameter by means of a predictive estimation method in the lane model.

### Summary of the invention

It is an object of the present invention to improve the road detection of a vehicle.

This object is achieved by the subject-matter of the independent claims. Further exemplary embodiments are evident from the dependent claims and the following description.

According to a first aspect of the present invention, a method for detecting a road in an environment of a vehicle is provided. In a step of the method, an image of the environment of the vehicle is provided by means of a camera of the vehicle, wherein the image comprises information about a group of objects in the environment of the vehicle. In another step, the information about the group of objects in the environment of the vehicle is converted from the image, e.g. the two-dimensional image plane, into a three-dimensional reference system. In another step, which is preferably carried out after converting the information of the image into the three-dimensional reference system, a first object and a second object are selected out of the group of objects based on an orientation of the first object with respect to an orientation of the second object. In another step of the method, the presence of a road in the environment of the vehicle is detected based on the selected first object and the selected second object.

Using such a method for detecting a road provides an easy implementation and a low cost solution for a variety of different road detection problems. The method may be applied to various scenarios and can also be improved by alternative approaches. An advantage of the method is that it can be distinguished whether objects within the environment of the vehicle belong to the road or whether they do not belong to the road. Such an assumption is, on the one hand, easy to implement and, on the other, requires less calculation effort when compared to existing algorithms for road detection.

In order to get information about objects in the environment, an image is taken by a camera of the vehicle. This image comprises information about a group of objects in the environment of the vehicle. For example, information about a group of objects means information about all objects depicted in the image by the camera. This information about the group of objects, e.g. the two-dimensional image information, is then converted from the image, in particular from the image plane into a three-dimensional reference system. This means that a conversion of the information about the group of objects from a two-dimensional view into the three-dimensional reference system is carried out. The three-dimensional reference system may be a virtual reference system into which the information about the group of objects is converted. Therefore, the three-dimensional reference system may also be called "real world system". In other words, the information about the group of objects present in the two-dimensional image is converted or transformed into information about the group of objects with respect to the three-dimensional reference system. It is possible that all information about the group of objects in the image is converted into the three-dimensional reference system. However, it is also possible that only a part of the information about the group of objects is converted from the two-dimensional image into the three-dimensional reference system.

The converted information about the group of objects may comprise information about a position and/or information about an orientation of the objects of the group of objects in the three-dimensional reference system.

In a further step, a first object and a second object are selected out of the group of objects wherein the selection is carried out based on the information about the orientation of the first object with respect to the orientation of the second object. This means that certain criteria may be applied based on which the selection of the first object and the second object takes place. It should be mentioned that further objects besides the first object and the second object may be selected out of the group of objects based on the orientations of the selected objects to each other.

The first object and the second object may be edge structures or edges of the road to be identified with the help of the method. In particular, the selection is carried out based on the arrangement, that means orientation and/or position of the first and second object, e.g. edge structures with respect to each other. Therefore, the converted information about the group of objects from the three-dimensional reference system is used to select the first obj ect and the second obj ect, e. g. the road edges based on the orientation of the first object with respect to the second object. If, for example, it is recognized that the first object is parallel to the second object with respect to the three-dimensional reference system, the presence of a road on which the vehicle is located may be detected. Therefore, the presence of the road in the environment of the vehicle is based on the determined orientation of the selected first object with respect to the selected second object. In other words, the detection of the road boundaries may be based on filtering out the previously selected first object and second object, e.g. edges for the road detection. Selection criteria may include a parallelism of the first object with respect to the second object as will be described in more detail hereinafter.

It should be noted that also a third object or a further object may be selected out of the group of objects based on an orientation of the third object with respect to an orientation of the first object and/or second object. The detection of the presence of a road in the environment of the vehicle is then based on the selected first object and/or second object and/or third object. However, the number of selected objects is not limited such that a plurality of objects may be selected based on which the detection of the presence of the road is carried out.

According to an embodiment of the invention, the first object and the second object are representative for elements of the road having a longitudinal extension.

In this manner, different kinds of objects in the environment of the vehicle may be considered when determining whether such an object belongs to the road or not. Therefore, it is possible that a road edge, a lane marking or a guard rail may be used as objects for detecting the presence of the road. In particular, the orientation of these objects with respect to each other in the three-dimensional reference system is used to determine or detect the presence of the road. Preferably, objects which are parallel to each other are identified as objects which belong to the road on which the vehicle drives. In other words, if the first object is parallel to the second object with respect to the three-dimensional reference system, any evaluation that the first object and the second object are parts of the road can be provided. In particular, the identification of parallel longitudinal objects, e.g. road edges, allows for the detection of the road in the environment of the vehicle. In the sense of the present invention, the term "longitudinal extension" may be considered as an element which has a length that is substantially greater than its width. It is possible that all elements having a length that is at least two times greater than its width are considered as longitudinal objects or elements. In most cases, those objects have a length that is at least 10 times higher than the width, like for example road markings on a road surface etc.

According to an embodiment of the invention, the first object and the second object are representative for road markings of the road.

Such road markings may for instance be lane markings, curb stones or guide railings located at both sides of the road. In general, these road markings may be considered as road edges which are usually parallel with respect to the three-dimensional reference system and therefore allow the detection of the presence of the road. Therefore, the method only requires the detection or selection of two road edges, for example the left and the right road edge, based on which the presence of the road or a road direction can be identified.

According to another embodiment of the invention, the first object and the second object are selected out of the group of objects if the first object is substantially parallel to the second object in the three-dimensional reference system.

In this manner, only the objects which are parallel to each other are selected. It should be mentioned that a road generally comprises parallel structures, for example road edges, sidewalks, lane markings in general, etc. which extend longitudinally and which are parallel to each other with respect to the three-dimensional reference system. The selection therefore provides for a distinction between objects that belong to the road and objects that do not belong to the road. For detecting the presence of the road, only the objects which belong to the road or which have been allocated to the road using parallelism criteria are considered for detecting the presence of the road.

According to another embodiment of the invention, the orientation of the first object in the three-dimensional reference system is determined based on a light intensity difference between two elements, wherein the first object separates the two elements. Additionally or alternatively, the orientation of the second object in the three-dimensional reference system is determined based on a light intensity difference between two other elements, wherein the second object separates the two other elements. In other words, the light intensity difference of the two elements is used to construct the first object and the second object, e.g. the road edges.

The orientations of the first and second object, e.g. the edges, is determined after converting the information about the group of objects, particularly the first and second object from the image into the three-dimensional reference system.

The light intensity difference may be based on information of the image, for example illumination information of the image taken by the camera of the vehicle. The road edge which may be the first object separates the sidewalk and the road surface. Therein, the sidewalk is the first element and the road surface is the second element, wherein the first element and the second element are separated by the first object, e.g. the road edge. The road edge may be identified as a part of a curb stone or a transition between the road surface and the sidewalk. The difference in the light intensity between the two elements, e.g. the road surface and the sidewalk, may indicate the position and orientation of the first object which for instance is a road edge. In this manner, the first object and the second object may be identified based on the light intensity difference between elements which are separated by the first object and the second object, respectively. In other words, the first object and the second object may describe longitudinal boundaries between two elements in the environment of the vehicle.

According to another embodiment of the invention, a relative position of the vehicle with respect to the first object and to the second object is determined, wherein the detection of the presence of the road in the environment of the vehicle is based on the determined relative position of the vehicle with respect to the first object and to the second object.

For example, an offset between the vehicle and the first object as well as an offset between the vehicle and the second object may be determined. If the vehicle is positioned between the first object and the second object which normally is the case in a driving scenario, this may be a further indication that the first object and the second object are road edges and that a road is present in the environment of the vehicle. In other words, the left and the right boundaries of the road are detected based on the identified first object and second object, e.g. road edges.

According to another embodiment of the invention, the determination of the relative position of the vehicle to the first object comprises a determination of a distance between the vehicle and the first object and the determination of the relative position of the vehicle to the second object comprises a determination of a distance between the vehicle and the second object.

Therefore, information about the distance between the road edges to the vehicle may be used for detecting the presence of the road. In particular, the distance of the vehicle to the left road edge and the distance of the vehicle to the right road edge may indicate or verify the presence of the road. In this manner, information about the road may be determined based on the position of the vehicle with respect to the first object and to the second object in the three-dimensional reference system.

According to another embodiment of the invention, the information about the group of objects in the environment of the vehicle is converted from the image into a three-dimensional reference system using camera parameters of the camera of the vehicle.

Thus, the information of the group of objects in the image, in particular the two-dimensional information, can be converted into three-dimensional information of the group of objects in the three-dimensional reference system such that, afterwards, the selection of the objects which belong to the road can be made on the basis of the three-dimensional reference system, in particular based on the orientation of such objects in the three-dimensional reference system. In other words, the orientation of the objects is determined in the three-dimensional reference system based on the three-dimensional information of the group of objects in the three-dimensional reference system. For converting or transforming the two-dimensional information into three-dimensional information about the group of objects, camera parameters of the camera of the vehicle may be used.

According to another aspect of the present invention, a driver assistance system for detecting the presence of a road in an environment of a vehicle is provided. The driver assistance system comprises a camera and a processing unit. The camera is configured for providing an image of the environment of the vehicle, wherein the image comprises information about a group of objects in the environment of the vehicle. The processing unit is configured for converting the information about the group of objects in the environment of the vehicle from the image into a three-dimensional reference system. The processing unit is configured for selecting a first object and a second object out of the group of objects based on an orientation of the first object with respect to an orientation of the second object. The processing unit is further configured for detecting the presence of a road in the environment of the vehicle based on the selected first object and the selected second object.

According to another aspect of the present invention, a vehicle comprising a driver assistance system is provided.

The inventive method for detecting a road in the environment of the vehicle comprises different steps. In a first step, road edges are detected in the image, for example based on the light intensity difference between elements separated by the road edges. In a second step, these road edges are projected into a three-dimensional reference system relative to the vehicle. As a consequence, the road edges are now represented in the three-dimensional reference system. In the three-dimensional reference system, the road edges have a distance and a certain orientation with respect to the vehicle. Road edges which are parallel to the road are then selected. Furthermore, a selection of the road edges that indicate the road is provided. For example, road edges which represent left and right boundaries of the road are selected. This aspect will be described in more detail in the description of the figures. The selection or filtering of the road edges belonging to the road may be based on a color or texture map. Furthermore, the selection or filtering process can be based on heuristics relating to intensity differences at the sides in the vicinity of the first and second object, e.g. edges. However, this selection or filtering process can also be based on texture information, color information, object segmentation information or other heuristics.

In general, the road detection method, e.g. the method for detecting the road in the environment of the vehicle, is based on a road direction detection method. This means that an integration over large vertical structures, so-called edge groups or road edges, is carried out. These structures are obtained by finding relevant gradients and associating or allocating them vertically in the image. Afterwards, an assumption that the road is parallel to the driving direction is used and large vertical edge structures, e.g. road edges, that are parallel to the detected road direction are identified. The identification of edge structures being parallel to the road direction is carried out after translating or converting these structures from two-dimensional image information into three-dimensional information of the three-dimensional reference system. Camera parameters may be used to convert this information.

Advantageously, this method is easy to implement as it uses already defined structures and this method is of very low cost. Compared to classifier methods, this approach has advantages relating to debugging. An issue or an error can be quickly analyzed and responded accordingly. Such a method provides a precise road model based on clothoids. Furthermore, the model is very convenient to use from a driving perspective.

### Brief description of the drawings

- Fig. 1: shows an image taken by a camera of a vehicle according to an embodiment of the invention.
- Fig. 2: shows an image taken by a camera of a vehicle according to another embodiment of the invention.
- Fig. 3: shows a vehicle with a driver assistance system according to an embodiment of the invention.
- Fig. 4: shows a flow diagram of a method for detecting a road according to an embodiment of the invention.

### Detailed description of the drawings

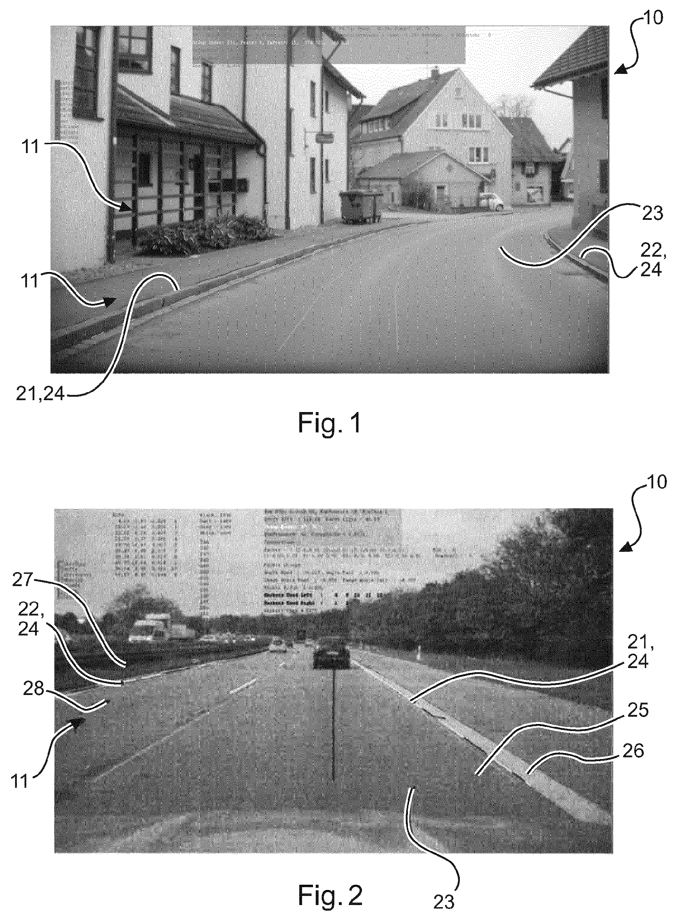

Fig. 1 shows an image 10 of an environment of the vehicle not shown in Fig. 1. In particular, the vehicle comprises a camera by which the image 10 is taken. The image 10 comprises information about a group of objects 11 in the environment of the vehicle. The information about the group of objects 11 may comprise information about objects like roads, buildings, trees, other vehicles, etc. The information about the group of objects 11 may also comprise information about the road 23 on which the vehicle is located. The road 23 may be defined by a first object 21 and a second object 22. The first object 21 and the second object 22 may be representative for road markings 24. In particular, the first object 21 and the second object 22 may be representative for edge structures 24 of the road 23. This means that the first object 21 and the second object 22 are boundaries of the road 23.

After converting the information about the group of objects 11 in the environment of the vehicle from the image 10 into a three-dimensional reference system, a selection of the first object 21 and the second object 22 out of the group of objects 11 is carried out. This selection may be based on an orientation of the first object 21 with respect to an orientation of the second object 22 in the three-dimensional reference system. In the three-dimensional reference system, the edge structures 24 of the road 23 are normally parallel to each other and parallel to the road 23. In this manner, a detection of the road 23 is possible. In particular, the detection of the presence of the road 23 in the environment of the vehicle is based on the selected first object 21, e.g. the left edge structure 24, as well as on the selected second object 22, e.g. the right edge structure 24.

The selection of the first object 21 and the selection of the second object 22 out of the group of objects 11 is carried out if the first object 21 is substantially parallel to the second object 22 in the three-dimensional reference system into which the information about the group of objects 11 was converted. If a parallelism between the first object 21 and the second object 22 is recognized, the presence of the road 23 can be detected. In particular, an assumption is made in which the first object 21 and the second object 22, e.g. the edge structures or road edges 24, are parallel to the road 23.

Fig. 2 shows another driving scenario of the vehicle wherein a camera of the vehicle has taken an image 10 comprising information about a group of objects 11. The information about the group of objects 11 may comprise information about the position and/or the orientation and in general the arrangement of other objects, for example cars, trees, lane markings, etc. in the environment of the vehicle. A first object 21 and a second object 22 which represent the right road edge and the left road edge, respectively, are selected after the information about the group of objects 11 in the environment of the vehicle has been converted into the three-dimensional reference system. Based on the three-dimensional reference system, an orientation of the first object 21 and the second object 22, e.g. the right road edge 24 and the left road edge 24, respectively, is determined. The first object 21 and the second object 22 is selected out of the group of objects 11 if the first object 21 is substantially parallel to the second object 22 in the three-dimensional reference system.

It should be noted that Fig. 1 and Fig. 2 show images 10 and not three-dimensional reference systems. A three-dimensional reference system may be imagined as a virtual reference system based on which the selection of the first object 21 and the second object 22 out of the group of objects 11 is carried out. If a parallelism between the first object 21 and the second object 22 is recognized with respect to the three-dimensional reference system, the presence of the road 23 can be determined. The orientation of the first object 21 in the three-dimensional reference system is determined based on a light intensity difference between two elements 25, 26 in the image 10, wherein the first object 21 separates the two elements 25 and 26. Based on this light intensity difference, the first object 21 can be recognized and in particular the orientation of the first object 21 can be determined. The same applies to the second object 22. In particular, the orientation of the second object 22 in the three-dimensional reference system is determined based on a light intensity difference between two elements 27, 28, wherein the second object 22 separates the two elements 27, 28. The different elements 25, 26, 27, 28 may be different parts of the road or the environment of the vehicle, for example road surfaces, lane markings, emergency lanes, etc.

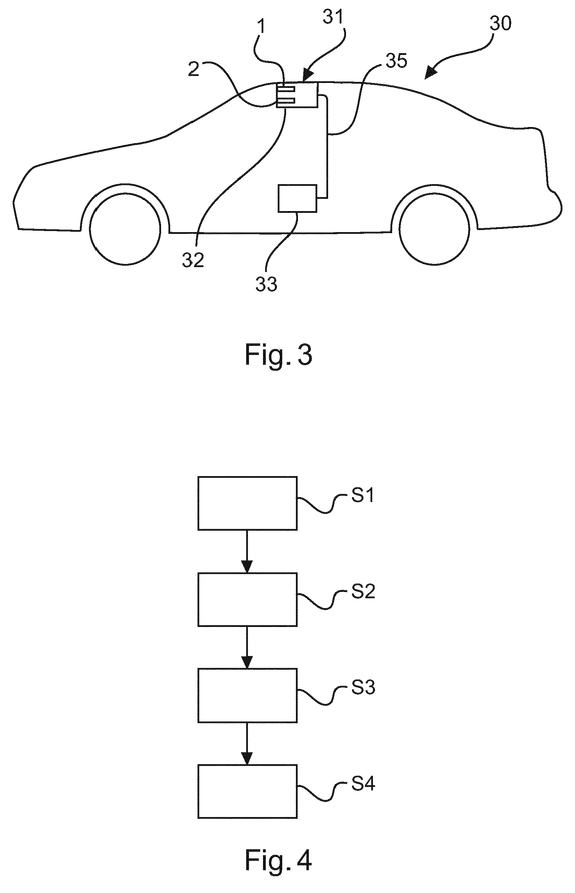

Fig. 3 shows a vehicle 30 with a driver assistance system 31. The driver assistance system 31 comprises a camera 32 as well as a processing unit 33. The camera 32 may be a stereo camera with a first camera 1 and a second camera 2. However, this is only an example and other types of cameras 32 are possible. The camera 32 and the processing unit 33 are connected by a cable bound or wireless connection 35.

If the presence of the road 23 in the environment of the vehicle 30 has been detected, this information may be used by the driver assistance system 31 in order to supply data to driver assistance functions of the vehicle 30. In this manner, the driving comfort for a driver of the vehicle 30 may be enhanced.

Fig. 4 shows a flow diagram for a method for detecting a road 23 in an environment of a vehicle 30. In a step S1 of the method, an image 10 of the environment of the vehicle 30 is provided by means of a camera 32 of the vehicle 30. The image 10 comprises information about a group of objects 11 in the environment of the vehicle 30. In another step S2, the information about the group of objects 11 in the environment of the vehicle 30 is converted from the image 10 into a three-dimensional reference system. In another step S3, a first object 21 and a second object 22 are selected out of the group of objects 11 based on an orientation of the first object 21 with respect to an orientation of the second object 22 in the three-dimenesional reference system. In yet another step S4 of the method, the presence of a road 23 in the environment of the vehicle 30 is detected based on the selected first object 21 and the selected second object 22.

While the invention has been illustrated and described in detail in the drawings and the foregoing description, such illustration and description are to be considered illustrative and exemplary and not restrictive; the invention is not limited to the disclosed embodiments. Other variations to the disclosed embodiments can be understood and effected by those skilled in the art and practicing the claimed invention, from a study of the drawings, the disclosure, and the appended clams. In the claims the term "comprising" does not exclude other elements, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of protection.

## Claims

1. Method for detecting a road in an environment of a vehicle, comprising the steps:
Providing an image (10) of the environment of the vehicle (30) by means of a camera (32) of the vehicle (30), the image (10) comprising information about a group of objects (11) in the environment of the vehicle (30, S1);
Converting the information about the group of objects (11) in the environment of the vehicle (30) from the image (10) into a three-dimensional reference system (S2);
Selecting a first object (21) and a second object (22) out of the group of objects (11) based on an orientation of the first object (21) with respect to an orientation of the second object (22, S3); and
Detecting the presence of a road (23) in the environment of the vehicle (30) based on the selected first object (21) and second object (22, S4).

2. Method according to claim 1,
wherein the first object (21) and the second object (22) are representative for elements of the road (23) having a longitudinal extension.

3. Method according to any one of the preceding claims,
wherein the first object (21) and the second object (22) are representative for road markings (24) of the road (23).

4. Method according to any one of the preceding claims, further comprising:
Selecting the first object (21) and the second object (22) out of the group of objects (11) if the first object (21) is substantially parallel to the second object (22) in the three-dimensional reference system.

5. Method according to any one of the preceding claims, further comprising:
Determining the orientation of the first object (21) in the three-dimensional reference system based on a light intensity difference between two elements (25, 26), wherein the first object (21) separates the two elements (25, 26); and/or
Determining the orientation of the second object (22) in the three-dimensional reference system based on a light intensity difference between two elements (27, 28), wherein the second object (22) separates the two elements (27, 28).

6. Method according to any one of the preceding claims, further comprising:
Determining a relative position of the vehicle (30) to the first object (21) and to the second object (22), wherein the detection of the presence of the road (23) in the environment of the vehicle (30) is based on the determined relative position of the vehicle (30) to the first object (21) and to the second object (22).

7. Method according to claim 6,
wherein the determination of the relative position of the vehicle (30) to the first object (21) comprises a determination of a distance between the vehicle (30) and the first object (21); and/or
wherein the determination of the relative position of the vehicle (30) to the second object (22) comprises a determination of a distance between the vehicle (30) and the second object (22).

8. Method according to any one of the preceding claims, further comprising:
Converting the information about the group of objects (11) in the environment of the vehicle (30) from the image (10) into a three-dimensional reference system using camera parameters of the camera (32) of the vehicle (30).

9. Driver assistance system (31) for a vehicle (30), comprising:
a camera (32);
a processing unit (33);
wherein the camera is configured for providing an image of the environment of the vehicle, the image comprising information about a group of objects in an environment of the vehicle;
wherein the processing unit (33) is configured for converting the information about the objects (11) in the environment of the vehicle (30) from the image (10) into a three-dimensional reference system;
wherein the processing unit (33) is configured for selecting a first object (21) and a second object (22) out of the group of objects (11) based on an orientation of the first object (21) with respect to an orientation of the second object (22); and
wherein the processing unit (33) is configured for detecting the presence of a road (23) in the environment of the vehicle (30) based on the selected first object (21) and second object (22).

10. Vehicle (30) comprising a driver assistance system (31) according to claim 9.
